# EUROPEAN PATENT APPLICATION

(11) **EP 4 557 830 A1**
(43) Date of publication of application: **21.05.2025**
(21) Application number: 23838865.6
(22) Date of filing: 07.07.2023
(51) Int. Cl.: H04W 36/00

(54) **AI MODEL INFORMATION TRANSMISSION METHOD AND APPARATUS, AND DEVICE**

(30) Priority: 12.07.2022 CN 202210822805
(71) Applicant: Vivo Mobile Communication Co., Ltd., Dongguan, Guangdong 523863 (CN)
(72) Inventor: PAN, Xiang, Dongguan, Guangdong 523863 (CN); ZHANG, Hongping, Dongguan, Guangdong 523863 (CN)
(74) Representative: Cabinet Beaumont
(86) International application number: PCT/CN2023/106353
(87) International publication number: WO 2024/012373

(57) **Abstract**

This application discloses an AI model information transmission method and apparatus and a device, and pertains to the field of communication technologies. The AI model information transmission method in embodiments of this application includes: sending, by a first communication device, first AI model information to a second communication device, where the first AI model information is used to indicate a first AI model and/or related information of the first AI model, and the first AI model is an AI model stored in UE; where the first communication device is the UE, and the second communication device is a communication peer end of the UE; or the first communication device is a source cell in a handover for the UE, and the second communication device is a target cell in the handover for the UE; or the first communication device is a historical access cell in an RRC resume procedure of the UE, and the second communication device is a new access cell in the RRC resume procedure of the UE.

## Description

### CROSS-REFERENCE TO RELATED APPLICATIONS

This application claims priority to Chinese Patent Application No. 202210822805.9, filed on July 12, 2022 and entitled "AI MODEL INFORMATION TRANSMISSION METHOD AND APPARATUS, AND DEVICE," which is incorporated herein by reference in its entirety.

### TECHNICAL FIELD

This application pertains to the field of communication technologies, and specifically to an AI model information transmission method and apparatus, and a device.

### BACKGROUND

Artificial intelligence (Artificial Intelligentce, AI) has been widely applied in various fields, and integrating AI into communication networks to significantly improve technical indicators such as throughput, delay, and user capacity is an important optimization direction for future communication networks.

With the deployment of AI model inference function on UEs, the UEs can have AI models pre-configured or stored, thereby reducing interactions of AI models with the UEs and networks. However, if a network side or communication peer end is unaware of related information of an AL model pre-configured or stored in UE, the network side or communication peer end cannot manage the AI model with appropriate configuration, update, activation, deactivation, or the like, and may repeatedly configure the UE with a same model or a model with same functions, leading to a decrease in AI model management efficiency and resource waste.

### SUMMARY

Embodiments of this application provide an AI model information transmission method and apparatus, and a device, to solve the problem of a decrease in AI model management efficiency and resource waste.

According to a first aspect, an AI model information transmission method is provided. The method includes:
sending, by a first communication device, first AI model information to a second communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

According to a second aspect, an AI model information transmission method is provided. The method includes:
receiving, by a second communication device, first AI model information from a first communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

According to a third aspect, an AI model information transmission apparatus is provided. The apparatus includes:
a first sending module, configured to send first AI model information to a second communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

According to a fourth aspect, an AI model information transmission apparatus is provided. The apparatus includes:
a first receiving module, configured to receive first AI model information from a first communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

According to a fifth aspect, a first communication device is provided. The first communication device includes a processor and a memory. The memory has stored thereon a program or instruction capable of running on the processor. When the program or instruction is executed by the processor, the steps of the method according to the first aspect are implemented.

According to a sixth aspect, a first communication device is provided, including a processor and a communication interface, where the communication interface is configured to:
send first AI model information to a second communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

According to a seventh aspect, a second communication device is provided. The second communication device includes a processor and a memory. The memory has stored thereon a program or instruction capable of running on the processor. When the program or instruction is executed by the processor, the steps of the method according to the second aspect are implemented.

According to an eighth aspect, a second communication device is provided, including a processor and a communication interface, where the communication interface is configured to:
receive first AI model information from a first communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

According to a ninth aspect, an AI model information transmission system is provided, including a first communication device and a second communication device. The first communication device can be configured to execute the steps of the AI model information transmission method according to the first aspect, and the second communication device can be configured to execute the steps of the AI model information transmission method according to the second aspect.

According to a tenth aspect, a readable storage medium is provided, where a program or instruction is stored in the readable storage medium, and when the program or the instruction is executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instruction to implement the method according to the first aspect, or implement the method according to the second aspect.

According to a twelfth aspect, a computer program/program product is provided. The computer program/program product is stored in a storage medium, and the computer program/program product is executed by at least one processor to implement the method according to the first aspect, or implement the method according to the second aspect.

In an embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

### BRIEF DESCRIPTION OF DRAWINGS

FIG. 1 is a block diagram of a wireless communication system to which embodiments of this application are applicable;
FIG. 2 is a flowchart of AI-based communication network optimization provided in related art;
FIG. 3 is a flowchart of UE capability reporting provided in related art;
FIG. 4 is a first schematic flowchart of an AI model information transmission method according to an embodiment of this application;
FIG. 5 is a second schematic flowchart of an AI model information transmission method according to an embodiment of this application;
FIG. 6 is a first schematic diagram of AI model information transmission according to an embodiment of this application;
FIG. 7 is a second schematic diagram of AI model information transmission according to an embodiment of this application;
FIG. 8 is a third schematic diagram of AI model information transmission according to an embodiment of this application;
FIG. 9 is a first schematic structural diagram of an AI model information transmission apparatus according to an embodiment of this application;
FIG. 10 is a second schematic structural diagram of an AI model information transmission apparatus according to an embodiment of this application;
FIG. 11 is a schematic structural diagram of a communication device according to an embodiment of this application;
FIG. 12 is a schematic diagram of a hardware structure of a first communication device according to an embodiment of this application; and
FIG. 13 is a schematic diagram of a hardware structure of a second communication device according to an embodiment of this application.

### DETAILED DESCRIPTION

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6-th generation (6^{th} Generation, 6G) communication system.

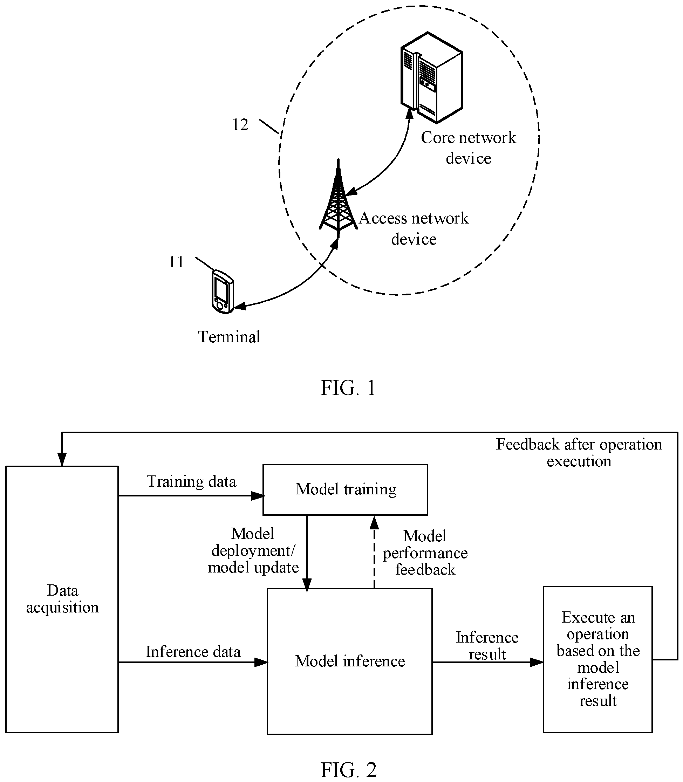

FIG. 1 is a block diagram of a wireless communication system to which embodiments of this application may be applicable. The wireless communication system includes UE 11 and a network-side device 12. The UE 11 may be a UE-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a household device with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the UE 11 is not limited to any particular type in the embodiments of this application. The network-side device 12 can include an access network device or core network device, where the access network device 12 can also be referred to as a radio access network device, radio access network (Radio Access Network, RAN), radio access network function, or radio access network unit. The access network device 12 can include base stations, WLAN access points, Wi-Fi nodes, or the like. The base station can be referred to as Node B, evolved Node B (evolved Node B, eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effects are achieved, the base station is not limited to any specific technical terminology. It should be noted that in the embodiments of this application, only the base station in the NR system is introduced as an example, and the specific type of the base station is not limited. The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), application function (Application Function, AF), and the like. It should be noted that in the embodiments of this application, only the core network device in the NR system is described as an example, and the specific type of the core network device is not limited.

Firstly, the following content is introduced.

### (1) Combination of artificial intelligence (Artificial Intelligence, AI) and communication networks

FIG. 2 is a flowchart of AI-based communication network optimization provided in related art. As shown in FIG. 2, a model training function and a model inference function are key functions in an overall process of AI-based communication network optimization.

The model training function generates an AI model based on training data, and after completing a model validity test, deploys the model to the model inference function. During the generation of the AI model, the model training function needs to acquire and analyze a large amount of data, requiring high hardware performance and computing power, and is mainly deployed on network-side devices, such as operation administration and maintenance (Operation Administration and Maintenance, OAM) nodes and base stations.

The model inference function is based on the above model and uses inference data as input to obtain AI inference output, such as air interface indicator prediction. The model inference function has lower requirements for hardware performance and computing power compared to the model training function. As UE capabilities continue to improve, and an AI-specific chip neural network processing unit (Neural Processing Unit, NPU) has even been added, AI-driven efficiency also continues to improve, making it possible to perform model inference and even partial model training on the UE side.

### (2) User equipment (User Equipment, UE) (such as UEs) capability reporting

A cellular wireless communication system relies on accurate and efficient coordination and intercommunication between a base station and UE, where UE capability (UE Capability) interaction is an important part of coordination between the base station and the UE. The base station can make correct scheduling for the UE only after knowing the UE capability. If the UE supports a function, the base station can configure that function for the UE; or if the UE does not support a function, the base station cannot configure that function for the UE.

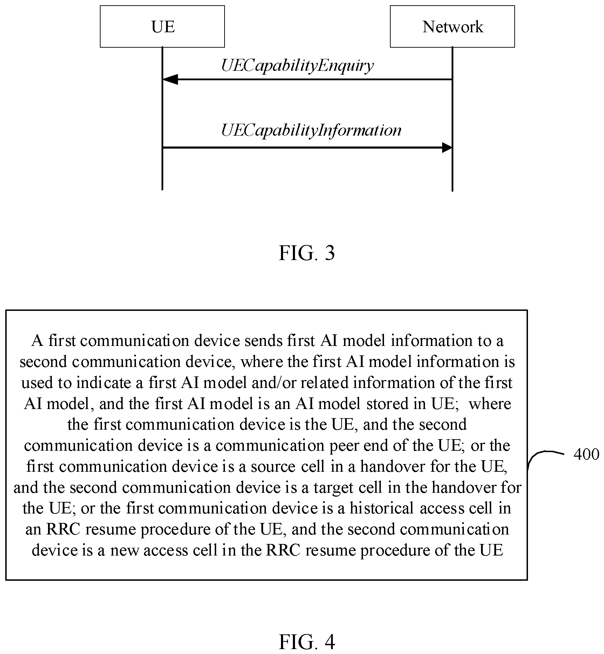

FIG. 3 is a flowchart of UE capability reporting provided in related art. As shown in FIG. 3, UE capability (UE capability) mainly involves two processes: UE Capability enquiry and UE Capability reporting. When the base station needs the UE to report UE Capability, the base station sends a UE capability enquiry (UECapabilityEnquiry) command to the UE. When the UE receives the UECapabilityEnquiry command, the UE sends UE capability information (UECapabilityInformation) according to the command.

The base station uses a filtering condition (filter) in the UECapabilityEnquiry signaling to perform filtering, indicating which UE Capability the base station wants to obtain.

UE Capability is divided into different levels of capability, and the UE Capability signaling structure includes:
UE specific UE Capability: Each UE can have different capabilities, and such UE capability applies to all bands and band combinations supported by the UE;
UE Capability in band combination (Band Combination) level: Each Band Combination can have different capabilities. For example, the Band Combination of Band3+Band77 supports a UE capability, whereas the Band Combination of Band1+Band78 may not support that UE capability; and
UE Capability in band (Band) level: Each Band can have different capabilities. For example, the Band 77 supports a UE capability, whereas Band 78 may not support that UE capability.

Another method of classifying UE capability is according to the protocol stack. In fact, in reporting, UE Capability is reported according to the protocol stack hierarchy. UE Capability reporting is divided into:
PDCP-Parameters: UE Capability corresponding to the PDCP (Packet Data Convergence Protocol, packet data convergence protocol) layer;
RLC-Parameters: UE Capability corresponding to the RLC (Radio Link Control, radio link layer control protocol) layer;
MAC-Parameters: UE Capability corresponding to the MAC (Media Access Control, Media Access control) layer;
Phy-Parameters: UE Capability corresponding to the PHY (Physical, physical layer) layer; and
RF-Parameters: UE Capability related to RF (Radio Frequency, radio frequency).

The following describes in detail AI model information transmission methods provided in an embodiment of this application through some embodiments and application scenarios thereof with reference to the accompanying drawings.

FIG. 4 is a first schematic flowchart of an AI model information transmission method according to an embodiment of this application. As shown in FIG. 4, the method includes the following procedure.

Step 400. A first communication device sends first AI model information to a second communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in a radio resource control (Radio Resource Control, RRC) resume procedure of the UE, and the second communication device is a new access cell in the RRC resume procedure of the UE.

Optionally, the first communication device may be UE, the first AI model may be an AI model stored in the UE, and correspondingly, the second communication device may be a communication peer end of the UE, such as a network-side device or another UE.

Optionally, the UE can send the first AI model and/or related information of the first AI model to the network-side device, so that the network-side device can manage the first AI model with appropriate configuration, update, activation, deactivation, and the like.

Optionally, the UE may send the first AI model and/or related information of the first AI model to another UE, then the another UE may forward the first AI model and/or related information of the first AI model to the network-side device, so that the network-side device can manage the first AI model with appropriate configuration, update, activation, deactivation, and the like.

Optionally, the network-side device may include a base station, core network functions, core network elements, or OAM.

Optionally, the UE can send the first AI model and/or related information of the first AI model to another UE, so that the another UE can manage the first AI model with appropriate configuration, update, activation, deactivation, and the like.

Optionally, the first communication device may be a source cell in the handover for the UE storing the first AI model, and the second communication device may be a target cell in the handover for the UE storing the first AI model.

Optionally, the source cell in the handover for the UE storing the first AI model may have saved the first AI model and/or related information of the first AI model, which, for example, may be reported by the UE to the source cell before the handover. Then, in the handover, the source cell can send the first AI model and/or related information of the first AI model to the target cell, so that after the handover has completed and the UE accesses the target cell, the target cell can manage the first AI model with appropriate configuration, update, activation, deactivation, and the like.

Optionally, a historical access cell in an RRC resume procedure of the UE storing the first AI model may have saved the first AI model and/or related information of the first AI model, which, for example, may be sent by the UE to the historical access cell before the handover. Then, in the RRC resume procedure, the historical access cell can send the first AI model and/or related information of the first AI model to a new access cell, so that after the RRC resume, the new access cell can manage the first AI model with appropriate configuration, update, activation, deactivation, and the like.

Optionally, the AI model stored in the UE can refer to an AI model pre-configured or stored in the UE.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

Optionally, the first AI model information includes at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

Optionally, the first AI model information may include a model identifier of the first AI model, and the model identifier of the first AI model may be used to uniquely identify the first AI model.

Optionally, the first AI model information may include a model functionality of the first AI model, and the model functionality of the first AI model may be used to represent a function or role of the first AI model, such as channel state information (Channel State Information, CSI) compression or reporting, beam management, or mobility management.

Optionally, the first AI model information may include a model applicable condition for the first AI model, and the model applicable condition for the first AI model may mean that the first AI model is effective only under the model applicable condition.

Optionally, the first AI model information may include a model activation state of the first AI model.

Optionally, the model activation state of the first AI model may include activated or inactivated.

Optionally, the first AI model information may include a model size of the first AI model.

Optionally, the first AI model information may include model authentication information of the first AI model, and the model authentication information of the first AI model can be used for the second communication device to identify or authenticate the first AI model.

Optionally, the first AI model information may include model structural information of the first AI model.

Optionally, the model structural information of the first AI model may include a neural network structure, such as the number of neural network layers.

Optionally, the model structural information of the first AI model may include any one or a combination of items in the foregoing information.

Optionally, the model applicable condition includes at least one of the following:
an applicable area;
an applicable time;
an applicable configuration; or
an applicable channel environment parameter.

Optionally, the model applicable condition for the first AI model may include an applicable area. For example, the first AI model is applicable only if the UE is within the applicable area, and if the UE moves outside the applicable area, the first AI model becomes non-applicable

Optionally, the model applicable condition for the first AI model may include an applicable time. For example, the first AI model is applicable only within the applicable time, and the first AI model becomes non-applicable outside this applicable time.

Optionally, the model applicable condition for the first AI model may include an applicable configuration. For example, the first AI model is applicable only if a network configuration matches the applicable configuration, and if the network configuration does not match the applicable configuration, the first AI model becomes non-applicable.

Optionally, the applicable configuration may include at least one of the following:
a reference signal spatial-domain configuration;
an antenna port configuration;
a reference signal frequency-domain configuration; or
a reference signal time-domain configuration.

Optionally, the model applicable condition for the first AI model may include an applicable channel environment parameter, and the applicable channel environment parameter may include value ranges of all channel environment parameters that can make the first AI model applicable. For example, if a channel environment parameter at a location of the UE is within a range of the applicable channel environment parameter, the first AI model is applicable; otherwise, the first AI model is non-applicable.

Optionally, the first AI model being non-applicable may mean that the related information of the first AI model is non-applicable.

Optionally, the first AI model being applicable may mean that the related information of the first AI model is applicable.

Optionally, the first AI model being non-applicable may mean that configuration information for the first AI model is non-applicable.

Optionally, the first AI model being applicable may mean that the configuration information for the first AI model is applicable.

Optionally, the first AI model being non-applicable may mean that the first AI model information corresponding to the first AI model is non-applicable.

Optionally, the first AI model being applicable may mean that the first AI model information corresponding to the first AI model is applicable.

Optionally, the applicable channel environment parameter may include a parameter of at least one of the following categories:
environment type;
line-of-sight/non line-of-sight type;
delay spread;
angle spread;
Doppler spread;
Doppler shift;
Rician K-factor;
shadowing fading;
reference signal arrival time difference;
reference signal round-trip time;
reference signal received power;
reference signal departure angle; or
reference signal arrival angle.

Optionally, before the sending, by a first communication device, first AI model information to a second communication device, the method further includes:
receiving, by the first communication device, an AI model information request, where the AI model information request is used to request the first AI model information.

Optionally, the first communication device may receive the AI model information request sent by the second communication device and, based on the AI model information request, send a first AI model and/or related information of the first AI model.

Optionally, the AI model information request is used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

Optionally, the second communication device sends an AI model information request for an AI model and/or related information of the AI model meeting a filtering condition (such as one or more of specific model identifier range, specific model functionality, applicable within a specific area, applicable under a specific network configuration, applicable under a specific channel environment parameter, in an applicable state, in an activated state, or in an inactivated state) in the AI model information request.

Optionally, what the first communication device sends to the second communication device may be all AI models stored in the UE and/or related information of all AI models stored in the UE.

Optionally, what the first communication device sends to the second communication device may be part of AI models stored in the UE and/or related information of some AI models stored in the UE.

Optionally, the first communication device may determine characteristics of the first AI model and/or related information of the first AI model to be sent to the second communication device based on the filtering condition in the AI model request, that is, based on the filtering condition in the AI model request, determining from among all AI models stored in the UE and/or related information of all AI models stored in the UE, some AI models and/or related information of some AI models that meet the filtering condition, to be sent as the first AI model and/or related information of the first AI model.

Optionally, the AI model information request may request a first AI model within a specific model identifier range and/or related information of a first AI model within a specific model identifier range from among all AI models stored in the UE. After receiving the AI model information request, the first communication device can check if there are one or more first AI models belonging to the specific model identifier range in all AI models stored in the UE, and if yes, send the one or more first AI models and/or related information of the one or more first AI models to the second communication device.

Optionally, the AI model information request may request a first AI model with a specific model functionality and/or related information of a first AI model with a specific model functionality from among all AI models stored in the UE. After receiving the AI model information request, the first communication device can check if there are one or more first AI models with the specific model functionality in all AI models stored in the UE, and if yes, send the one or more first AI models and/or related information of the one or more first AI models to the second communication device.

Optionally, the AI model information request may request a first AI model applicable within a specific area and/or related information of a first AI model applicable within a specific area from among all AI models stored in the UE. After receiving the AI model information request, the first communication device can check if there are one or more first AI models applicable within the specific area in all AI models stored in the UE, and if yes, send the one or more first AI models and/or related information of the one or more first AI models to the second communication device.

Optionally, the AI model information request may request a first AI model applicable under a specific network configuration and/or related information of a first AI model applicable under a specific network configuration from among all AI models stored in the UE. After receiving the AI model information request, the first communication device can check if there are one or more first AI models applicable under the specific network configuration in all AI models stored in the UE, and if yes, send the one or more first AI models and/or related information of the one or more first AI models to the second communication device.

Optionally, the AI model information request may request a first AI model applicable under a specific channel environment parameter and/or related information of a first AI model applicable under a specific channel environment parameter from among all AI models stored in the UE. After receiving the AI model information request, the first communication device can check if there are one or more first AI models applicable under the specific channel environment parameter in all AI models stored in the UE, and if yes, send the one or more first AI models and/or related information of the one or more first AI models to the second communication device.

Optionally, the AI model information request may request a first AI model in an applicable state and/or related information of a first AI model in an applicable state from among all AI models stored in the UE. After receiving the AI model information request, the first communication device can check if there are one or more first AI models in the applicable state in all AI models stored in the UE, and if yes, send the one or more first AI models and/or related information of the one or more first AI models to the second communication device.

Optionally, the AI model information request may request a first AI model in an activated state and/or related information of a first AI model in an activated state from among all AI models stored in the UE. After receiving the AI model information request, the first communication device can check if there are one or more first AI models in the activated state in all AI models stored in the UE, and if yes, send the one or more first AI models and/or related information of the one or more first AI models to the second communication device.

Optionally, the AI model information request may request a first AI model in an inactivated state and/or related information of a first AI model in an inactivated state from among all AI models stored in the UE. After receiving the AI model information request, the first communication device can check if there are one or more first AI models in the inactivated state in all AI models stored in the UE, and if yes, send the one or more first AI models and/or related information of the one or more first AI models to the second communication device.

Optionally, the AI model information request may request all AI models stored in the UE and/or related information of all AI models stored in the UE. After receiving the AI model information request, the first communication device can send all AI models stored in the UE and/or related information of all AI models stored in the UE to the second communication device.

Optionally, in a case that the first communication device is the UE and the second communication device is a communication peer end of the UE, before the sending, by a first communication device, first AI model information to a second communication device, the method further includes:
determining, by the first communication device, second AI model information, where the second AI model information is used to indicate a second AI model and/or related information of the second AI model, and the second AI model is an AI model supported by the second communication device.

Optionally, the first communication device may first determine a second AI model supported by the second communication device and/or related information of a second AI models supported by the second communication device.

Optionally, the UE may first determine second AI model information, where the second AI model information is used to indicate a second AI model and/or related information of a second AI model, and the second AI model is an AI model supported by a network-side device.

Optionally, after the determining, by the first communication device, second AI model information, the method further includes:
sending, by the first communication device, first indication information to the second communication device, where the first indication information is used to indicate that the second AI model and/or an AI model matching related information of the second AI model is available in the first communication device.

Optionally, the first communication device may first determine a second AI model supported by the second communication device and/or related information of a second AI models supported by the second communication device. If the first communication device finds that the second AI model is included in all AI models stored by itself, the first communication device can send first indication information to the second communication device, informing the second communication device that the second AI model and/or an AI model matching related information of the second AI model is available in the first communication device.

Optionally, after receiving the first indication information, the second communication device may send an AI model information request to the first communication device to request the first AI model and/or related information of the first AI model; and after receiving the AI model information request, the first communication device may send the first AI model and/or related information of the first AI model to the second communication device.

For example, after receiving the first indication information, the network-side device may send an AI model information request to the UE to request the first AI model and/or related information of the first AI model. After receiving the AI model information request, the UE may send the first AI model and/or related information of the first AI model to the network-side device.

Optionally, the determining, by the first communication device, second AI model information, includes:
receiving, by the first communication device, broadcast information from the second communication device; and
determining, by the first communication device, the second AI model information based on the broadcast information.

Optionally, the manner in which the first communication device determines a second AI model supported by the second communication device and/or related information of the second AI models supported by the second communication device may be determined by the first communication device based on broadcast information from the second communication device.

For example, the network-side device may broadcast the second AI model supported and/or related information of the second AI model supported by the second communication device. After receiving the broadcast information, the UE can determine the second AI model supported by the second communication device and/or related information of the second AI model supported by the second communication device. If the UE finds that the second AI model is included in all AI models stored by itself, the UE can send first indication information to the network-side device, informing the network-side device that the second AI model and/or an AI model matching related information of the second AI model is available in the UE. After receiving the first indication information, the network-side device can send an AI model information request to the UE to request the first AI model and/or related information of the first AI model. After receiving the AI model information request, the UE can send the first AI model and/or related information of the first AI model to the network-side device.

Optionally, the method further includes:
sending, by the first communication device, second indication information to the second communication device, where the second indication information is used to indicate that an AI model is available in the UE and/or that the UE has a model inference capability.

Optionally, the first communication device may send the second indication information to the second communication device in advance, informing the second communication device that an AI model is available in the first communication device.

Optionally, after receiving the second indication information, the second communication device may send an AI model information request to the first communication device to request the first AI model and/or related information of the first AI model. After receiving the AI model information request, the first communication device may send the first AI model and/or related information of the first AI model to the second communication device.

Optionally, the second indication information is used to indicate that an AI model is already stored in the UE or that the UE has a model inference capability.

Optionally, in a case that the first communication device is a source cell in a handover and the second communication device is a target cell in the handover, the first AI model information is included in a handover request.

Optionally, in a case that the first communication device is a historical access cell in the RRC resume procedure, and the second communication device is a new access cell in the RRC resume procedure, the first AI model information is included in UE context information.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

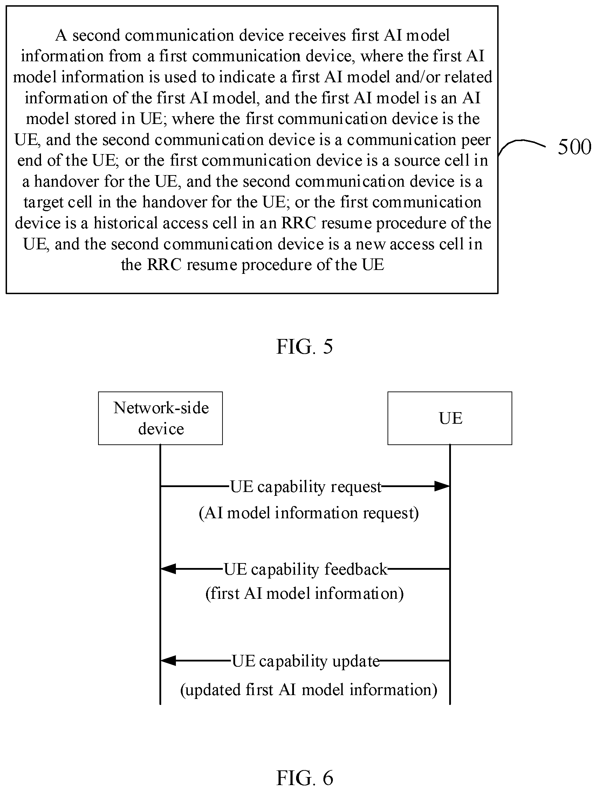

FIG. 5 is a second schematic flowchart of an AI model information transmission method according to an embodiment of this application. As shown in FIG. 5, the method includes the following procedure.

Step 500. A second communication device receives first AI model information from a first communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

Optionally, the first communication device may be UE, the first AI model may be an AI model stored in the UE, and correspondingly, the second communication device may be a communication peer end of the UE, such as a network-side device or another UE.

Optionally, the network-side device may receive the first AI model and/or related information of the first AI model sent by the UE and then can manage the first AI model with appropriate configuration, update, activation, deactivation, and the like.

Optionally, another UE may receive the first AI model and/or related information of the first AI model sent by the UE, and the another UE may forward the first AI model and/or related information of the first AI model to the network-side device, so that the network-side device can manage the first AI model with appropriate configuration, update, activation, deactivation, and the like.

Optionally, the network-side device may include a base station, core network functions, core network elements, or OAM.

Optionally, the another UE may receive the first AI model and/or related information of the first AI model sent by the UE and then can manage the first AI model with appropriate configuration, update, activation, deactivation, and the like.

Optionally, the first communication device may be a source cell in the handover for the UE storing the first AI model, and the second communication device may be a target cell in the handover for the UE storing the first AI model.

Optionally, the source cell in the handover for the UE storing the first AI model may have saved the first AI model and/or related information of the first AI model, which, for example, may be reported by the UE to the source cell before the handover. Then, in the handover, the source cell can send the first AI model and/or related information of the first AI model to the target cell, so that after the handover has completed and the UE accesses the target cell, the target cell can manage the first AI model with appropriate configuration, update, activation, deactivation, and the like.

Optionally, a historical access cell in an RRC resume procedure of the UE storing the first AI model may have saved the first AI model and/or related information of the first AI model, which, for example, may be sent by the UE to the historical access cell before the handover. Then, in the RRC resume procedure, the historical access cell can send the first AI model and/or related information of the first AI model to a new access cell, so that after the RRC resume, the new access cell can manage the first AI model with appropriate configuration, update, activation, deactivation, and the like.

Optionally, the AI model stored in the UE can refer to an AI model pre-configured or stored in the UE.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

Optionally, the first AI model information includes at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

Optionally, the first AI model information may include a model identifier of the first AI model, and the model identifier of the first AI model may be used to uniquely identify the first AI model.

Optionally, the first AI model information may include a model functionality of the first AI model, and the model functionality of the first AI model may be used to represent a function or role of the first AI model, such as CSI compression or reporting, beam management, or mobility management.

Optionally, the first AI model information may include a model applicable condition for the first AI model, and the model applicable condition for the first AI model may mean that the first AI model is applicable only under the model applicable condition.

Optionally, the first AI model information may include a model activation state of the first AI model.

Optionally, the model activation state of the first AI model may include activated or inactivated.

Optionally, the first AI model information may include a model size of the first AI model.

Optionally, the first AI model information may include model authentication information of the first AI model, and the model authentication information of the first AI model can be used for the second communication device to identify or authenticate the first AI model.

Optionally, the first AI model information may include model structural information of the first AI model.

Optionally, the model structural information of the first AI model may include a neural network structure, such as the number of neural network layers.

Optionally, the model structural information of the first AI model may include any one or a combination of items in the foregoing information.

Optionally, the model applicable condition includes at least one of the following:
an applicable area;
an applicable time;
an applicable configuration; or
an applicable channel environment parameter.

Optionally, the model applicable condition for the first AI model may include an applicable area. For example, the first AI model is applicable only if the UE is within the applicable area, and if the UE moves outside the applicable area, the first AI model becomes non-applicable.

Optionally, the model applicable condition for the first AI model may include an effective time. For example, the first AI model is effective only within the effective time, and the first AI model becomes non-applicable outside this effective time.

Optionally, the model applicable condition for the first AI model may include an effective configuration. For example, the first AI model is effective only if a network configuration matches the effective configuration, and if the network configuration does not match the effective configuration, the first AI model becomes non-applicable.

Optionally, the effective configuration may include at least one of the following:
a reference signal spatial-domain configuration;
an antenna port configuration;
a reference signal frequency-domain configuration; or
a reference signal time-domain configuration. Optionally, the model applicable condition for the first AI model may include an effective channel environment parameter, and the effective channel environment parameter may include value ranges of all channel environment parameters that can make the first AI model applicable. For example, if a channel environment parameter at a location of the UE is within a range of the effective channel environment parameter, the first AI model is effective; otherwise, the first AI model is non-applicable.

Optionally, the first AI model being non-applicable may mean that the related information of the first AI model is non-applicable.

Optionally, the first AI model being effective may mean that the related information of the first AI model is effective.

Optionally, the first AI model being non-applicable may mean that configuration information for the first AI model is non-applicable.

Optionally, the first AI model being effective may mean that the configuration information for the first AI model is effective.

Optionally, the first AI model being non-applicable may mean that the first AI model information corresponding to the first AI model is non-applicable.

Optionally, the first AI model being applicable may mean that the first AI model information corresponding to the first AI model is applicable.

Optionally, the applicable channel environment parameter may include a parameter of at least one of the following categories:
environment type;
line-of-sight/non line-of-sight type;
delay spread;
angle spread;
Doppler spread;
Doppler shift;
Rician K-factor;
shadowing fading;
reference signal arrival time difference;
reference signal round-trip time;
reference signal received power;
reference signal departure angle; or
reference signal arrival angle.

Optionally, before the receiving, by a second communication device, first AI model information from a first communication device, the method further includes:
sending, by the second communication device, an AI model information request to the first communication device, where the AI model information request is used to request the first AI model information.

Optionally, the second communication device may send an AI model information request to the first communication device and the first communication device may send a first AI model and/or related information of the first AI model based on the AI model information request.

Optionally, the AI model information request is used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

Optionally, specific can mean specified or specific. In other words, the second communication device sends an AI model information request for an AI model and/or related information of the AI model meeting a filtering condition (such as one or more of specific model identifier range, specific model functionality, applicable within a specific area, applicable under a specific network configuration, applicable under a specific channel environment parameter, in an applicable state, in an activated state, or in an inactivated state) in the AI model information request.

Optionally, what the first communication device sends to the second communication device may be all AI models stored in the UE and/or related information of all AI models stored in the UE.

Optionally, what the first communication device sends to the second communication device may be some AI models stored in the UE and/or related information of some AI models stored in the UE.

Optionally, the first communication device may determine characteristics of the first AI model and/or related information of the first AI model to be sent to the second communication device based on the filtering condition in the AI model request, that is, based on the filtering condition in the AI model request, determining from among all AI models stored in the UE and/or related information of all AI models stored in the UE, some AI models and/or related information of some AI models that meet the filtering condition, to be sent as the first AI model and/or related information of the first AI model.

Optionally, the AI model information request may request a first AI model within a specific model identifier range and/or related information of a first AI model within a specific model identifier range from among all AI models stored in the UE. After receiving the AI model information request, the first communication device can check if there are one or more first AI models belonging to the specific model identifier range in all AI models stored in the UE, and if yes, send the one or more first AI models and/or related information of the one or more first AI models to the second communication device.

Optionally, the AI model information request may request a first AI model with a specific model functionality and/or related information of a first AI model with a specific model functionality from among all AI models stored in the UE. After receiving the AI model information request, the first communication device can check if there are one or more first AI models with the specific model functionality in all AI models stored in the UE, and if yes, send the one or more first AI models and/or related information of the one or more first AI models to the second communication device.

Optionally, the AI model information request may request a first AI model applicable within a specific area and/or related information of a first AI model applicable within a specific area from among all AI models stored in the UE. After receiving the AI model information request, the first communication device can check if there are one or more first AI models applicable within the specific area in all AI models stored in the UE, and if yes, send the one or more first AI models and/or related information of the one or more first AI models to the second communication device.

Optionally, the AI model information request may request a first AI model applicable under a specific network configuration and/or related information of a first AI model applicable under a specific network configuration from among all AI models stored in the UE. After receiving the AI model information request, the first communication device can check if there are one or more first AI models applicable under the specific network configuration in all AI models stored in the UE, and if yes, send the one or more first AI models and/or related information of the one or more first AI models to the second communication device.

Optionally, the AI model information request may request a first AI model applicable under a specific channel environment parameter and/or related information of a first AI model applicable under a specific channel environment parameter from among all AI models stored in the UE. After receiving the AI model information request, the first communication device can check if there are one or more first AI models applicable under the specific channel environment parameter in all AI models stored in the UE, and if yes, send the one or more first AI models and/or related information of the one or more first AI models to the second communication device.

Optionally, the AI model information request may request a first AI model in an applicable state and/or related information of a first AI model in an applicable state from among all AI models stored in the UE. After receiving the AI model information request, the first communication device can check if there are one or more first AI models in the applicable state in all AI models stored in the UE, and if yes, send the one or more first AI models and/or related information of the one or more first AI models to the second communication device.

Optionally, the AI model information request may request a first AI model in an activated state and/or related information of a first AI model in an activated state from among all AI models stored in the UE. After receiving the AI model information request, the first communication device can check if there are one or more first AI models in the activated state in all AI models stored in the UE, and if yes, send the one or more first AI models and/or related information of the one or more first AI models to the second communication device.

Optionally, the AI model information request may request a first AI model in an inactivated state and/or related information of a first AI model in an inactivated state from among all AI models stored in the UE. After receiving the AI model information request, the first communication device can check if there are one or more first AI models in the inactivated state in all AI models stored in the UE, and if yes, send the one or more first AI models and/or related information of the one or more first AI models to the second communication device.

Optionally, the AI model information request may request all AI models stored in the UE and/or related information of all AI models stored in the UE. After receiving the AI model information request, the first communication device can send all AI models stored in the UE and/or related information of all AI models stored in the UE to the second communication device.

Optionally, in a case that the first communication device is the UE and the second communication device is a communication peer end of the UE, the method further includes:
broadcasting, by the second communication device, second AI model information, where the second AI model information is used to indicate a second AI model and/or related information of the second AI model, and the second AI model is an AI model supported by the second communication device.

Optionally, the second communication device may broadcast second AI model information, so that the first communication device determines the second AI model supported by the second communication device and/or related information of the second AI model supported by the second communication device.

Optionally, after the broadcasting, by the second communication device, the second AI model information, the method further includes:
receiving, by the second communication device, first indication information from the first communication device; and
determining, by the second communication device based on the first indication information, that the second AI model and/or an AI model matching related information of the second AI model is available in the first communication device.

Optionally, the first communication device may first determine a second AI model supported by the second communication device and/or related information of a second AI models supported by the second communication device. If the first communication device finds that the second AI model is included in all AI models stored by itself, the first communication device can send first indication information to the second communication device, informing the second communication device that the second AI model and/or an AI model matching related information of the second AI model is available in the first communication device.

Optionally, after receiving the first indication information, the second communication device may send an AI model information request to the first communication device to request the first AI model and/or related information of the first AI model; and after receiving the AI model information request, the first communication device may send the first AI model and/or related information of the first AI model to the second communication device.

For example, after receiving the first indication information, the network-side device may send an AI model information request to the UE to request the first AI model and/or related information of the first AI model. After receiving the AI model information request, the UE may send the first AI model and/or related information of the first AI model to the network-side device.

For example, the network-side device may broadcast the second AI model supported and/or related information of the second AI model supported by the second communication device. After receiving the broadcast information, the UE can determine the second AI model supported by the second communication device and/or related information of the second AI model supported by the second communication device. If the UE finds that the second AI model is included in all AI models stored by itself, the UE can send first indication information to the network-side device, informing the network-side device that the second AI model and/or an AI model matching related information of the second AI model is available in the UE. After receiving the first indication information, the network-side device can send an AI model information request to the UE to request the first AI model and/or related information of the first AI model. After receiving the AI model information request, the UE can send the first AI model and/or related information of the first AI model to the network-side device.

Optionally, the method further includes:
receiving, by the second communication device, second indication information from the first communication device; and
determining, by the second communication device based on the second indication information, that an AI model is available in the UE and/or that the UE has a model inference capability.

Optionally, the first communication device may send the second indication information to the second communication device in advance, informing the second communication device that an AI model is available in the first communication device.

Optionally, after receiving the second indication information, the second communication device may send an AI model information request to the first communication device to request the first AI model and/or related information of the first AI model. After receiving the AI model information request, the first communication device may send the first AI model and/or related information of the first AI model to the second communication device.

Optionally, in a case that the first communication device is a source cell in a handover and the second communication device is a target cell in the handover, the first AI model information is included in a handover request.

Optionally, in a case that the first communication device is a historical access cell in the RRC resume procedure, and the second communication device is a latest access cell in the RRC resume procedure, the first AI model information is included in UE context information.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

In one embodiment, taking an example of the first communication device being UE and the second communication device being a network side, a first AI model and/or related information of the first AI model may be reported in the form of UE capability information. FIG. 6 is a first schematic diagram of AI model information transmission according to an embodiment of this application. As shown in FIG. 6, the following steps may be included.

Step (1): A network sends a UE capability enquiry to UE, where the UE capability enquiry may include an AI model information request, that is, the content included in the UE capability enquiry may be used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

Step (2): The UE sends UE capability feedback to the network-side device, including first AI model information, which is used to feedback existing AI model information meeting a filtering condition, and may include at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

The model applicable condition includes at least one of the following:
an applicable area;
an applicable time;
an applicable configuration; or
an applicable channel environment parameter.

Step (3): After the UE feeds back the UE capability, if the AI model and/or related information of the AI model on the UE side changes, the UE may send a UE capability update to the network-side device. The update may be addition, modification, or deletion of the AI model and/or related information of the AI model based on the model identifier.

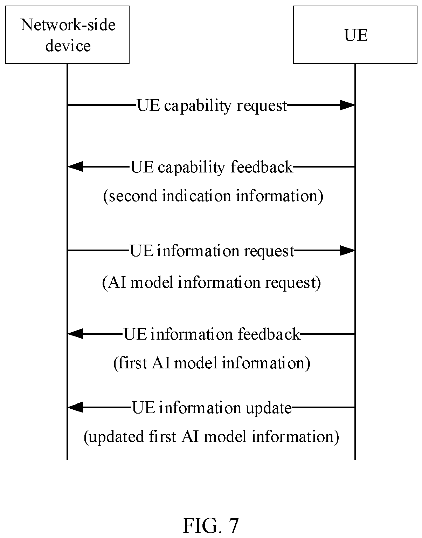

In one embodiment, taking an example of the first communication device being UE and the second communication device being a network side, a first AI model and/or related information of the first AI model may be reported in the form of a capability indication combined with feedback from the UE following a request from the network-side device. FIG. 7 is a second schematic diagram of AI model information transmission according to an embodiment of this application. As shown in FIG. 7, the following steps may be included.

Step (1): A network sends a UE capability enquiry to UE.

Step (2): The UE may indicate in UE capability feedback that an AI model is already stored or that the UE has a model inference capability.

Optionally, this may be an indication by function granularity.

For example, the UE includes second indication information in the UE capability feedback.

Optionally, the second indication information is used to indicate that an AI model is already stored in the UE and/or that the UE has a model inference capability.

Step (3): The network sends a UE information request to the UE, which may include an AI model information request, that is, the content included in the UE capability enquiry may be used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

Step (4): The UE sends UE information feedback to a network-side device, which may include first AI model information.

Step (5): After the UE feeds back the UE capability, if the AI model and/or related information of the AI model on the UE side changes, the UE may send a UE capability update to the network-side device. The update may be addition, modification, or deletion of the AI model and/or related information of the AI model based on the model identifier.

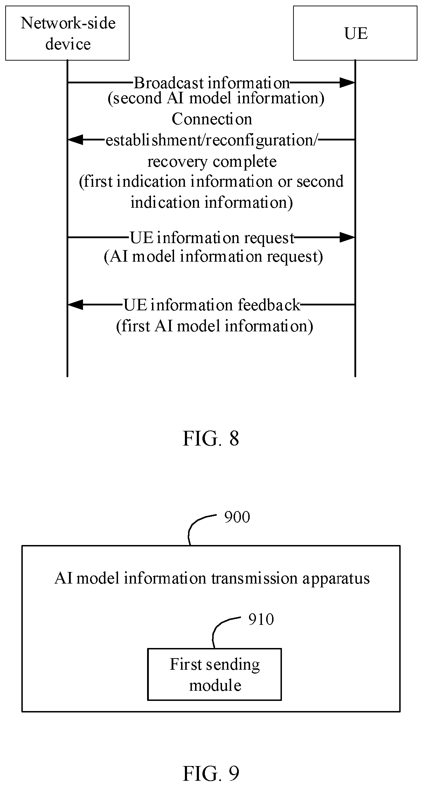

In one embodiment, taking an example of the first communication device being UE and the second communication device being a network side, a first AI model and/or related information of the first AI model may be reported in the form of an RRC message indication combined with feedback from the UE following a request from the network-side device. FIG. 8 is a third schematic diagram of AI model information transmission according to an embodiment of this application. As shown in FIG. 8, the following steps may be included.

Step (1): A base station broadcasts second AI model information, where the second AI model information may include at least one of the following:
a supported AI function;
a network configuration related to a supported AI function;
a channel environment parameter related to a supported AI function; or
a list of supported AI model identifiers.

Step (2): After receiving the broadcast information, the UE may determine a second AI model supported by the base station and/or related information of the second AI models supported by the base station.

Optionally, the UE may include the first indication information or the second indication information in the RRC message.

Optionally, the first indication information is used to indicate that the second AI model supported by the base station is stored in the UE and/or that there is an AI model matching related information of the second AI model.

Optionally, the first indication information is used to indicate that an AI model is already stored in the UE and/or that the UE has a model inference capability.

Optionally, the UE may also indicate a stored AI model and/or an AI model update (through the first indication information or the second indication information) in the RRC establishment/reconfiguration/resume complete.

Step (3): The network sends a UE information request to the UE, which may include an AI model information request, that is, the content included in the UE information request may be used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

Step (4): The UE sends UE information feedback to a network-side device, which may include first AI model information.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

FIG. 9 is a first schematic structural diagram of an AI model information transmission apparatus according to an embodiment of this application. As shown in FIG. 9, the AI model information transmission apparatus 900 includes a first sending module 910.

The first sending module 910 is configured to send first AI model information to a second communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

The AI model information transmission apparatus provided in this embodiment of this application can implement the processes that are implemented by the foregoing method embodiments, with the same technical effects achieved. To avoid repetition, details are not repeated herein.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

Optionally, the first AI model information includes at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

Optionally, the model applicable condition includes at least one of the following:
an applicable area;
an applicable time;
an applicable configuration; or
an applicable channel environment parameter.

Optionally, the apparatus further includes:
a second receiving module, configured to receive an AI model information request before the first communication device sends first AI model information to the second communication device, where the AI model information request is used to request the first AI model information.

Optionally, the AI model information request is used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

Optionally, in a case that the first communication device is the UE and the second communication device is a communication peer end of the UE, the apparatus further includes:
a first determining module, configured to determine second AI model information before the first communication device sends first AI model information to the second communication device, where the second AI model information is used to indicate a second AI model and/or related information of the second AI model, and the second AI model is an AI model supported by the second communication device.

Optionally, the apparatus further includes:
a second sending module, configured send first indication information to the second communication device after the first communication device determines the second AI model information, where the first indication information is used to indicate that the second AI model and/or an AI model matching related information of the second AI model is available in the first communication device.

Optionally, the first determining module is configured to:
receive broadcast information from the second communication device; and
determine the second AI model information based on the broadcast information.

Optionally, the apparatus further includes:
a third sending module, configured to send second indication information to the second communication device, where the second indication information is used to indicate that an AI model is available in the UE and/or that the UE has a model inference capability.

Optionally, in a case that the first communication device is a source cell in a handover and the second communication device is a target cell in the handover, the first AI model information is included in a handover request.

Optionally, in a case that the first communication device is a historical access cell in the RRC resume procedure, and the second communication device is a new access cell in the RRC resume procedure, the first AI model information is included in UE context information.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

The AI model information transmission apparatus in this embodiment of this application may be an electronic device such as an electronic device with an operating system, or a component in an electronic device such as an integrated circuit or chip. The electronic device may be UE or a device other than UEs. For example, the UE may include but is not limited to the types of the UE 11 listed above, and the other device may be a server, a network attached storage (Network Attached Storage, NAS), or the like. This is not specifically limited in this embodiment of this application.

The AI model information transmission apparatuses provided in this embodiment of this application can implement the processes that are implemented in the method embodiments of FIG. 4 to FIG. 8, with the same technical effects achieved. To avoid repetition, details are not repeated herein.

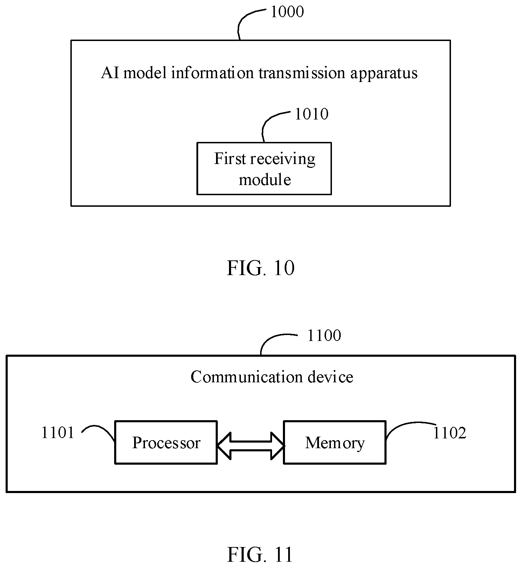

FIG. 10 is a second schematic structural diagram of an AI model information transmission apparatus according to an embodiment of this application. As shown in FIG. 10, the AI model information transmission apparatus 1000 includes a first receiving module 1010, where
the first receiving module 1010 is configured to receive first AI model information from a first communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

The AI model information transmission apparatus provided in this embodiment of this application can implement the processes that are implemented by the foregoing method embodiments, with the same technical effects achieved. To avoid repetition, details are not repeated herein.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

Optionally, the first AI model information includes at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

Optionally, the model applicable condition includes at least one of the following:
an applicable area;
an applicable time;
an applicable configuration; or
an applicable channel environment parameter.

Optionally, the apparatus further includes:
a fourth sending module, configured to send an AI model information request to the first communication device before the second communication device receives first AI model information from the first communication device, where the AI model information request is used to request the first AI model information.

Optionally, the AI model information request is used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

Optionally, in a case that the first communication device is the UE and the second communication device is a communication peer end of the UE, the apparatus further includes:
a broadcasting module, configured to broadcast second AI model information, where the second AI model information is used to indicate a second AI model and/or related information of the second AI model, and the second AI model is an AI model supported by the second communication device.

Optionally, the apparatus further includes:
a third receiving module, configured to receive first indication information from the first communication device after the second communication device broadcasts second AI model information; and
a second determining module, configured to determine based on the first indication information that the second AI model and/or an AI model matching related information of the second AI model is available in the first communication device.

Optionally, the apparatus further includes:
a fourth receiving module, configured to receive second indication information from the first communication device; and
a third determining module, configured to determine based on the second indication information that an AI model is available in the UE and/or that the UE has a model inference capability.

Optionally, in a case that the first communication device is a source cell in a handover and the second communication device is a target cell in the handover, the first AI model information is included in a handover request.

Optionally, in a case that the first communication device is a historical access cell in the RRC resume procedure, and the second communication device is a latest access cell in the RRC resume procedure, the first AI model information is included in UE context information.

The AI model information transmission method provided in the embodiments of this application can be executed by an AI model information transmission apparatus. In an embodiment of this application, an AI model information transmission apparatus executing the AI model information transmission method is used as an example to describe the AI model information transmission apparatus provided in the embodiments of this application.

The AI model information transmission apparatus in this embodiment of this application may be an electronic device such as an electronic device with an operating system, or a component in an electronic device such as an integrated circuit or chip. The electronic device may be UE or a device other than UEs. For example, the UE may include but is not limited to the types of the UE 11 listed above, and the other device may be a server, a network attached storage (Network Attached Storage, NAS), or the like. This is not specifically limited in this embodiment of this application.

The AI model information transmission apparatuses provided in this embodiment of this application can implement the processes that are implemented in the method embodiments of FIG. 5 to FIG. 8, with the same technical effects achieved. To avoid repetition, details are not repeated herein.

Optionally, FIG. 11 is a schematic structural diagram of a communication device according to an embodiment of this application. As shown in FIG. 11, an embodiment of this application further provides a communication device 1100 including a processor 1101 and a memory 1102. The memory 1102 has stored thereon a program or instruction capable of running on the processor 1101. For example, if the communication device 1100 is a first communication device, when the program or instruction is executed by the processor 1101, the steps of the foregoing embodiments of the AI model information transmission method are implemented, with the same technical effects achieved. When the communication device 1100 is a second communication device, the program or instruction is executed by the processor 1101 to implement the steps of the foregoing embodiments of the AI model information transmission method, with the same technical effects achieved. To avoid repetition, details are not repeated herein.

An embodiment of this application further provides a first communication including a processor and a communication interface, where the communication interface is configured to:
send first AI model information to a second communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

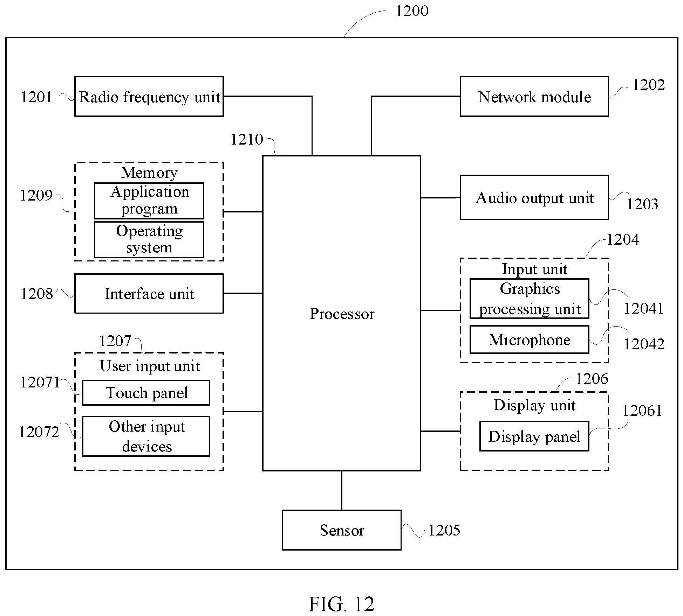

The first communication device embodiment corresponds to the foregoing method embodiment on the first communication device side. All processes and implementations in the foregoing method embodiment are applicable to this first communication device embodiment, with the same technical effects achieved. Specifically, FIG. 12 is a schematic diagram of a hardware structure of a first communication device according to an embodiment of this application.

The first communication device may be UE 1200. The UE 1200 includes but is not limited to at least part of these components: a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art can understand that the UE 1200 may further include a power supply (for example, a battery) supplying power to the components, and the power supply may be logically connected to the processor 1210 through a power management system. In this way, functions such as charge management, discharge management, and power consumption management are implemented by using the power management system. The structure of the UE shown in FIG. 12 does not constitute any limitation on the UE. The UE may include more or fewer components than shown in the figure, or a combination of some components, or the components disposed differently. Details are not described herein.

It should be understood that in this embodiment of this application, the input unit 1204 may include a graphics processing unit (Graphics Processing Unit, GPU) 12041 and a microphone 12042. The graphics processing unit 12041 processes image data of a static picture or a video that is obtained by an image capture apparatus (for example, a camera) in a video capture mode or an image capture mode. The display unit 1206 may include a display panel 12061, and the display panel 12061 may be configured in a form of a liquid crystal display, an organic light-emitting diode, and the like. The user input unit 1207 includes at least one of a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a functional button (such as a volume control button or a power on/off button), a trackball, a mouse, and a joystick. Details are not described herein.

In an embodiment of this application, the radio frequency unit 1201 receives downlink data from a network-side device and transfers the data to the processor 1210 for processing; and the radio frequency unit 1201 can additionally send uplink data to the network-side device. Generally, the radio frequency unit 1201 includes but is not limited to an antenna, an amplifier, a transceiver, a coupler, a low noise amplifier, and a duplexer.

The memory 1209 may be configured to store software programs or instructions and various data. The memory 1209 may include a first storage area for storing programs or instructions and a second storage area for storing data. The first storage area may store an operating system, an application program or instructions required by at least one function (for example, a sound playback function or an image playback function), and the like. Additionally, the memory 1209 may be a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1209 in this embodiment of this application includes but is not limited to these and any other suitable types of memories.

The processor 1210 may include one or more processing units. Optionally, the processor 1210 may integrate an application processor and a modem processor. The application processor primarily processes operations involving an operating system, user interface, application program, or the like. The modem processor primarily processes radio communication signals, for example, being a baseband processor. It can be understood that the modem processor may be alternatively not integrated in the processor 1210.

Optionally, the processor 1210 is configured to:
send first AI model information to a second communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

Optionally, the first AI model information includes at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

Optionally, the model applicable condition includes at least one of the following:
an applicable area;
an applicable time;
an applicable configuration; or
an applicable channel environment parameter.

Optionally, the processor 1210 is configured to:
receive an AI model information request before the first communication device sends first AI model information to the second communication device, where the AI model information request is used to request the first AI model information.

Optionally, the AI model information request is used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

Optionally, in a case that the first communication device is the UE and the second communication device is a communication peer end of the UE, the processor 1210 is configured to:
determine second AI model information before the first communication device sends first AI model information to the second communication device, where the second AI model information is used to indicate a second AI model and/or related information of the second AI model, and the second AI model is an AI model supported by the second communication device.

Optionally, the processor 1210 is configured to:
send first indication information to the second communication device after the first communication device determines the second AI model information, where the first indication information is used to indicate that the second AI model and/or an AI model matching related information of the second AI model is available in the first communication device.

Optionally, the processor 1210 is configured to:
receive broadcast information from the second communication device; and
determine the second AI model information based on the broadcast information.

Optionally, the processor 1210 is configured to:
send second indication information to the second communication device, where the second indication information is used to indicate that an AI model is available in the UE and/or that the UE has a model inference capability.

Optionally, in a case that the first communication device is a source cell in a handover and the second communication device is a target cell in the handover, the first AI model information is included in a handover request.

Optionally, in a case that the first communication device is a historical access cell in the RRC resume procedure, and the second communication device is a new access cell in the RRC resume procedure, the first AI model information is included in UE context information.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

An embodiment of this application further provides a second communication including a processor and a communication interface, where the communication interface is configured to:
receive first AI model information from a first communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

The second communication device embodiment corresponds to the foregoing second communication device method embodiment. All processes and implementations in the foregoing method embodiment are applicable to this second communication device embodiment, with the same technical effects achieved.

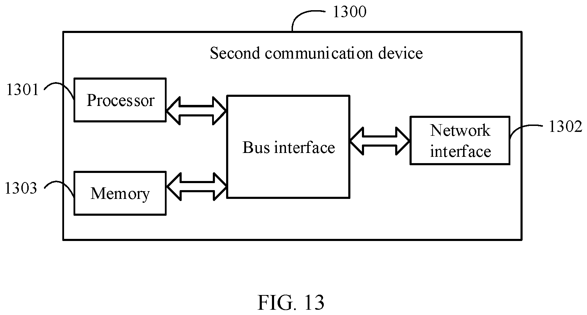

Specifically, an embodiment of this application further provides a second communication device. FIG. 13 is a schematic diagram of a hardware structure of a second communication device according to an embodiment of this application. As shown in FIG. 13, the second communication device 1300 includes a processor 1301, a network interface 1302, and a memory 1303. The network interface 1302 is, for example, a common public radio interface (Common Public Radio Interface, CPRI).

Specifically, the second communication device 1300 in this embodiment of the present invention further includes an instruction or program stored in the memory 1303 and executable on the processor 1301. The processor 1301 invokes the instruction or program in the memory 1303 to execute the method executed by the modules shown in FIG. 10, with the same technical effects achieved. To avoid repetition, details are not repeated herein.

Optionally, the processor 1301 is configured to:
receive first AI model information from a first communication device, where the first AI model information is used to indicate a first AI model and/or related information of the first AI model, and the first AI model is an AI model stored in UE; where
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

In this embodiment of this application, a first communication device sends first AI model information stored in UE to a second communication device, to indicate a first AI model and/or related information of the first AI model stored in the UE to a network side or communication peer end, so that the network side or communication peer end can manage the first AI model stored in the UE with appropriate configuration, update, activation, deactivation, or the like in a timely manner, to enhance AI model management efficiency, avoid repeated configuration of a same model or a model with a same function for the UE, and save resources.

Optionally, the first AI model information includes at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

Optionally, the model applicable condition includes at least one of the following:
an applicable area;
an applicable time;
an applicable configuration; or
an applicable channel environment parameter.

Optionally, the processor 1301 is configured to:
send an AI model information request to the first communication device before the second communication device receives first AI model information from the first communication device, where the AI model information request is used to request the first AI model information.

Optionally, the AI model information request is used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

Optionally, in a case that the first communication device is the UE and the second communication device is a communication peer end of the UE, the processor 1301 is configured to:
broadcast second AI model information, where the second AI model information is used to indicate a second AI model and/or related information of the second AI model, and the second AI model is an AI model supported by the second communication device.

Optionally, the processor 1301 is configured to:
receive first indication information from the first communication device after the second communication device broadcasts second AI model information; and
determine based on the first indication information that the second AI model and/or an AI model matching related information of the second AI model is available in the first communication device.

Optionally, the processor 1301 is configured to:
receive second indication information from the first communication device; and
determine based on the second indication information that an AI model is available in the UE and/or that the UE has a model inference capability.

Optionally, in a case that the first communication device is a source cell in a handover and the second communication device is a target cell in the handover, the first AI model information is included in a handover request.

Optionally, in a case that the first communication device is a historical access cell in the RRC resume procedure, and the second communication device is a latest access cell in the RRC resume procedure, the first AI model information is included in UE context information.

The AI model information transmission method provided in the embodiments of this application can be executed by an AI model information transmission apparatus. In an embodiment of this application, an AI model information transmission apparatus executing the AI model information transmission method is used as an example to describe the AI model information transmission apparatus provided in the embodiments of this application.

An embodiment of this application further provides a readable storage medium. The readable storage medium has stored thereon a program or instruction. When the program or instruction is executed by a processor, the processes of the foregoing embodiments of the AI model information transmission methods are implemented, with the same technical effects achieved. To avoid repetition, details are not repeated herein.

The processor is a processor in the UE described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction to implement the processes of the foregoing embodiments of the AI model information transmission methods, with the same technical effects achieved. To avoid repetition, details are not repeated herein.

It should be understood that the chip mentioned in an embodiment of this application may also be referred to as a system-level chip, a system chip, a chip system, a system on a chip, or the like.

An embodiment of this application further provides a computer program/program product, where the computer program/program product is stored in a storage medium, and the computer program/program product is executed by at least one processor to implement the processes of the foregoing embodiments of the AI model information transmission methods, with the same technical effects achieved. To avoid repetition, details are not repeated herein.

An embodiment of this application further provides an AI model information transmission system, including a first communication device and a second communication device. The first communication device can be configured to execute the steps of the foregoing AI model information transmission method, and the second communication device can be configured to execute the steps of the foregoing AI model information transmission method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing implementations, persons skilled in the art can clearly understand that the method in the foregoing embodiments may be implemented by software in addition to a necessary universal hardware platform or certainly by hardware only, but in many cases, the former is the more preferred implementation. Based on such an understanding, the technical solutions of this application essentially or a part thereof that contributes to the prior art may be embodied in a form of a computer software product. The computer software product is stored in a storage medium (such as a ROM/RAM, a magnetic disk, or an optical disc), and includes several instructions for instructing UE (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An AI model information transmission method, comprising:
sending, by a first communication device, first AI model information to a second communication device, wherein the first AI model information is used to indicate a first AI model and/or related information of the first AI model, and the first AI model is an artificial intelligence AI model stored in UE; wherein
the first communication device is the UE, and the second communication device is a communication peer end of the UE; or
the first communication device is a source cell in a handover for the UE, and the second communication device is a target cell in the handover for the UE; or
the first communication device is a historical access cell in a radio resource control RRC resume procedure of the UE, and the second communication device is a new access cell in the RRC resume procedure of the UE.

2. The AI model information transmission method according to claim 1, wherein the first AI model information comprises at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

3. The AI model information transmission method according to claim 2, wherein the model applicable condition comprises at least one of the following:
an applicable area;
an applicable time;
an applicable configuration; or
an applicable channel environment parameter.

4. The AI model information transmission method according to any one of claims 1 to 3, wherein, before the sending, by a first communication device, first AI model information to a second communication device, the method further comprises:
receiving, by the first communication device, an AI model information request, wherein the AI model information request is used to request the first AI model information.

5. The AI model information transmission method according to claim 4, wherein the AI model information request is used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

6. The AI model information transmission method according to any one of claims 1 to 5, wherein in a case that the first communication device is the UE and the second communication device is a communication peer end of the UE, before the sending, by a first communication device, first AI model information to a second communication device, the method further comprises:
determining, by the first communication device, second AI model information, wherein the second AI model information is used to indicate a second AI model and/or related information of the second AI model, and the second AI model is an AI model supported by the second communication device.

7. The AI model information transmission method according to claim 6, wherein after the determining, by the first communication device, second AI model information, the method further comprises:
sending, by the first communication device, first indication information to the second communication device, wherein the first indication information is used to indicate that the second AI model and/or an AI model matching related information of the second AI model is available in the first communication device.

8. The AI model information transmission method according to claim 6 or 7, wherein the determining, by the first device, second AI model information comprises:
receiving, by the first communication device, broadcast information from the second communication device; and
determining, by the first communication device, the second AI model information based on the broadcast information.

9. The AI model information transmission method according to any one of claims 1 to 8, wherein the method further comprises:
sending, by the first communication device, second indication information to the second communication device, wherein the second indication information is used to indicate that an AI model is available in the UE and/or that the UE has a model inference capability.

10. The AI model information transmission method according to any one of claims 1 to 5, wherein in a case that the first communication device is a source cell in a handover and the second communication device is a target cell in the handover, the first AI model information is comprised in a handover request.

11. The AI model information transmission method according to any one of claims 1 to 5, wherein in a case that the first communication device is a historical access cell in the RRC resume procedure, and the second communication device is a new access cell in the RRC resume procedure, the first AI model information is comprised in UE context information.

12. An AI model information transmission method, comprising:
receiving, by a second communication device, first AI model information from a first communication device, wherein the first AI model information is used to indicate a first AI model and/or related information of the first AI model, and the first AI model is an AI model stored in UE; wherein
the first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

13. The AI model information transmission method according to claim 12, wherein the first AI model information comprises at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

14. The AI model information transmission method according to claim 13, wherein the model applicable condition comprises at least one of the following:
an applicable area;
an applicable time;
an applicable configuration; or
an applicable channel environment parameter.

15. The AI model information transmission method according to any one of claims 12 to 14, wherein before the receiving, by a second communication device, first AI model information from a first communication device, the method further comprises:
sending, by the second communication device, an AI model information request to the first communication device, wherein the AI model information request is used to request the first AI model information.

16. The AI model information transmission method according to claim 15, wherein the AI model information request is used to request at least one of the following:
an AI model corresponding to a specific model identifier range and/or related information of the AI model corresponding to a specific model identifier range;
an AI model with a specific model functionality and/or related information of the AI model with a specific model functionality;
an AI model applicable within a specific area and/or related information of the AI model applicable within a specific area;
an AI model applicable under a specific network configuration and/or related information of the AI model applicable under a specific network configuration;
an AI model applicable under a specific channel environment parameter and/or related information of the AI model applicable under a specific channel environment parameter;
an AI model in an applicable state and/or related information of the AI model in an applicable state;
an AI model in an activated state and/or related information of the AI model in an activated state;
an AI model in an inactivated state and/or related information of the AI model in an inactivated state; or
all AI models stored in the UE and/or related information of all AI models stored in the UE.

17. The AI model information transmission method according to any one of claims 12 to 16, wherein in a case that the first communication device is the UE and the second communication device is a communication peer end of the UE, the method further comprises:
broadcasting, by the second communication device, second AI model information, wherein the second AI model information is used to indicate a second AI model and/or related information of the second AI model, and the second AI model is an AI model supported by the second communication device.

18. The AI model information transmission method according to claim 17, wherein after the broadcasting, by the second communication device, second AI model information, the method further comprises:
receiving, by the second communication device, first indication information from the first communication device; and
determining, by the second communication device based on the first indication information, that the second AI model and/or an AI model matching related information of the second AI model is available in the first communication device.

19. The AI model information transmission method according to any one of claims 12 to 18, wherein the method further comprises:
receiving, by the second communication device, second indication information from the first communication device; and
determining, by the second communication device based on the second indication information, that an AI model is available in the UE and/or that the UE has a model inference capability.

20. The AI model information transmission method according to any one of claims 12 to 16, wherein in a case that the first communication device is a source cell in a handover and the second communication device is a target cell in the handover, the first AI model information is comprised in a handover request.

21. The AI model information transmission method according to any one of claims 12 to 16, wherein in a case that the first communication device is a historical access cell in the RRC resume procedure, and the second communication device is a latest access cell in the RRC resume procedure, the first AI model information is comprised in UE context information.

22. An AI model information transmission apparatus, comprising:
a first sending module, configured to send first AI model information to a second communication device, wherein the first AI model information is used to indicate a first AI model and/or related information of the first AI model, and the first AI model is an AI model stored in UE; wherein
a first communication device is the UE, and the second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

23. The AI model information transmission apparatus according to claim 22, wherein the first AI model information comprises at least one of the following:
a model identifier of the first AI model, used to uniquely identify the first AI model;
a model functionality of the first AI model;
a model applicable condition for the first AI model;
a model activation state of the first AI model;
a model size of the first AI model;
model authentication information of the first AI model, used for the second communication device to identify or authenticate the first AI model; or
model structural information of the first AI model.

24. The AI model information transmission apparatus according to claim 23, wherein the model applicable condition comprises at least one of the following:
an applicable area;
an applicable time;
an applicable configuration; or
an applicable channel environment parameter.

25. An AI model information transmission apparatus, comprising:
a first receiving module, configured to receive first AI model information from a first communication device, wherein the first AI model information is used to indicate a first AI model and/or related information of the first AI model, and the first AI model is an AI model stored in UE; wherein
the first communication device is the UE, and a second communication device is a communication peer end of the UE; or
the first communication device is a source cell in a handover for the UE, and the second communication device is a target cell in the handover for the UE; or
the first communication device is a historical access cell in an RRC resume procedure of the UE, and the second communication device is a new access cell in the RRC resume procedure of the UE.

26. A first communication device, comprising a processor and a memory, wherein the memory has stored thereon a program or instruction capable of running on the processor, and when the program or instruction is executed by the processor, the steps of the AI model information transmission method according to any one of claims 1 to 11 are implemented.

27. A second communication device, comprising a processor and a memory, wherein the memory has stored thereon a program or instruction capable of running on the processor, and when the program or instruction is executed by the processor, the steps of the AI model information transmission method according to any one of claims 12 to 21 are implemented.

28. A readable storage medium, wherein the readable storage medium has stored thereon a program or instruction, and when the program or instruction is executed by a processor, the steps of the AI model information transmission method according to any one of claims 1 to 11 are implemented, or the steps of the AI model information transmission method according to any one of claims 12 to 21 are implemented.
